Europäisches Patentamt

European Patent Office

Office européen des brevets

(19)

(11) **EP 0 735 263 B1**

(12) **FASCICULE DE BREVET EUROPEEN**

(45) Date de publication et mention
de la délivrance du brevet:
**30.09.1998 Bulletin 1998/40**

(51) Int Cl.⁶: **F02K 3/10**, F02K 3/11

(21) Numéro de dépôt: **96400660.5**

(22) Date de dépôt: **28.03.1996**

(54) **Procédé pour éviter les instabilités dues à la combustion dans un dispositif de post-combustion**

Verfahren zur Vermeidung von Verbrennungsinstabilitäten eines Nachbrenners

Avoiding combustion instabilities in a reheat combustor

(84) Etats contractants désignés:
**DE FR GB**

(30) Priorité: **29.03.1995 FR 9503664**

(43) Date de publication de la demande:
**02.10.1996 Bulletin 1996/40**

(73) Titulaire: **SOCIETE NATIONALE D'ETUDE ET DE CONSTRUCTION DE MOTEURS D'AVIATION, "S.N.E.C.M.A."**
**75015 Paris (FR)**

(72) Inventeurs:
• **Capelle, Jean-Yves**
  **91310 Montlhery (FR)**
• **Le Letty, Eric Charles Louis**
  **77350 Le Mee sur Seine (FR)**
• **Desaulty, Michel André Albert**
  **77240 Vert Saint Denis (FR)**

(56) Documents cités:
EP-A- 0 005 425        FR-A- 2 554 170
GB-A- 1 452 487        GB-A- 2 275 738
US-A- 2 911 788        US-A- 4 095 420
US-A- 4 720 971

## Description

L'invention concerne un procédé pour éviter les instabilités provoquées par une combustion dans un turboréacteur. Elle s'applique en particulier aux moteurs d'avion multi-flux équipés d'un dispositif de post-combustion.

Les chambres de combustion et de post-combustion des moteurs d'avion présentent dans certaines conditions de fonctionnement des instabilités provoquées par un couplage d'oscillations instables dues au dégagement de la chaleur et des fluctuations de la pression acoustique. Deux types d'instabilités sont particulièrement critiques pour la tenue mécanique et thermique des foyers de post-combustion. Le premier type d'instabilité est caractérisé par une fréquence f1 de l'ordre de quelques centaines de Hertz correspondant à un mode de vibration de type longitudinal. Le second type d'instabilité est caractérisé par une fréquence f2 de l'ordre de quelques milliers de Hertz correspondant à un mode de vibration de type radial longitudinal appelé crissement ou plus communément "screech" en langue anglaise.

Pour éviter l'apparition de ces phénomènes, les foyers de combustion et/ou de post-combustion sont souvent équipés de dispositifs d'amortissement passifs constitués par exemple d'un ensemble d'orifices jouant le rôle de résonateurs de Helmholtz. Cependant ces dispositifs ne permettent généralement pas d'éviter toutes les fréquences de vibration et leur efficacité est limitée. Un dispositif d'amortissement est connu du document GB-A-145487.

La présente invention a pour objet un procédé permettant d'éviter les instabilités de combustion correspondant aux différents modes de vibration et permettant de compléter fonctionnellement les systèmes d'amortissement passifs existants.

Pour cela, le procédé consiste à identifier expérimentalement dans une phase de mise au point du moteur, les zones d'apparition des fréquences de vibration puis à élaborer des lois de régulation du carburant qui complètent fonctionnellement les systèmes d'amortissement passifs et qui permettent d'éviter ces zones de vibration.

Selon l'invention, le procédé pour éviter les instabilités dues à la combustion dans un turboréacteur comportant au moins deux flux appelés flux primaire et flux secondaire, équipé d'un dispositif de post-combustion dans lequel est injecté un mélange air-carburant dans des proportions mesurées en terme de richesses primaire et secondaire, sur chacun des flux et de richesse globale, est caractérisé en ce qu'il consiste :

- à détecter expérimentalement, lors de la mise au point du turboréacteur, les zones de vibration dues à la post-combustion en fonction des conditions de fonctionnement du turboréacteur et en fonction du domaine de fonctionnement de la post-combustion,

- à élaborer des lois de régulation des richesses du carburant sur chaque flux permettant d'éviter les zones de vibration détectées.

D'autres particularités et avantages de l'invention apparaîtront clairement dans la suite de la description donnée à titre d'exemple non limitatif et faite en regard des figures annexées qui représentent :

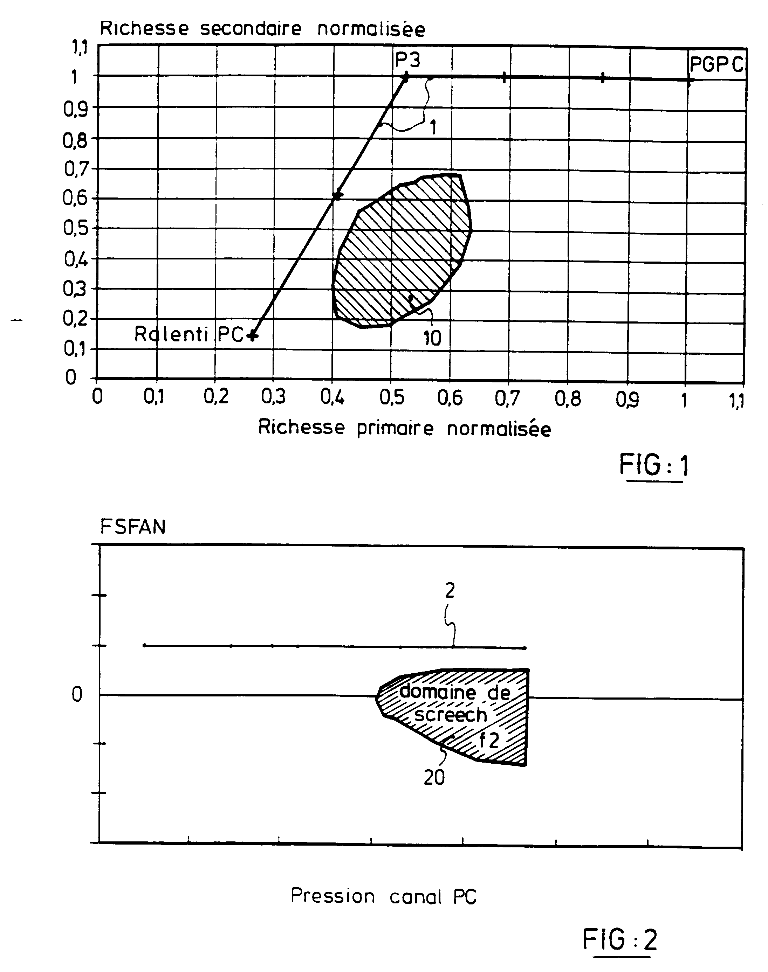

- la figure 1, un exemple de détection d'une zone de vibration en fonction des valeurs des richesses primaire et secondaire et un exemple de loi de répartition des richesses primaire et secondaire permettant d'éviter cette zone de vibration lorsque le point de fonctionnement de la post-combustion est situé entre le ralenti et le plein gaz ;

- la figure 2, un exemple de détection d'une zone de vibration en fonction de la pression et en fonction d'un paramètre noté FSFAN caractéristique de l'enrichissement ou de l'appauvrissement du flux secondaire relativement à une valeur donnée de richesse globale de post-combustion, et un exemple de loi d'évolution au paramètre FSFAN permettant d'éviter cette zone de vibration lorsque le point de fonctionnement de la post-combustion est situé au plein gaz.

Dans toute la description suivante, la richesse du carburant est définie par le rapport du débit du carburant sur le débit d'air associé ; la richesse globale est définie par le rapport du débit total de carburant sur le débit total d'air.

Les zones d'apparition des fréquences de vibrations dues à la post-combustion dépendent de la technologie et des conditions de fonctionnement du moteur. Dans un moteur à double flux primaire et secondaire, les vibrations dues à la post-combustion dépendent de la richesse primaire du carburant dans le flux primaire, de la richesse secondaire du carburant dans le flux secondaire et de la pression des gaz dans le canal de post-combustion. En particulier, les zones de vibrations sont d'autant plus importantes que la pression dans le moteur et dans le canal de post-combustion sont élevées.

Ces zones de vibrations peuvent apparaître dans un domaine de fonctionnement de la post-combustion situé entre le niveau de ralenti et le niveau de plein gaz et/ou dans un domaine de fonctionnement de la post-combustion situé au plein gaz.

L'invention consiste donc dans une phase de mise au point du moteur, à déterminer expérimentalement les zones d'apparition des fréquences de vibration en faisant varier les richesses du carburant dans les flux primaire et secondaire et la pression des gaz dans le canal de post-combustion pour différentes conditions de fonctionnement du moteur et pour différents domaines de fonctionnement de la post-combustion. La figure 1 représente, dans un diagramme à deux dimensions correspondant à la richesse secondaire en fonction de la richesse primaire, une zone de vibration et un exemple de loi de répartition des richesses permettant d'éviter cette zone de vibration.

La zone de vibration 10 représentée sur cette figure correspond à un fonctionnement de la post-combustion situé entre le ralenti et le plein gaz et est tracée à pression constante en faisant varier les valeurs de richesses primaire et secondaire. Les dimensions de cette zone augmentant lorsque la pression des gaz dans le canal de post-combustion augmente, il est préférable de rechercher cette zone de vibration en plaçant le moteur dans des conditions de fonctionnement les plus pénalisantes pour lesquelles la valeur de pression dans le canal de post-combustion et les dimensions de la zone de vibration sont les plus importantes. Par exemple, la pression à l'entrée du moteur, dite pression d'arrêt, sera réglée à une valeur supérieure ou égale à 2 Bars. Ces conditions de fonctionnement du moteur correspondent, en terme d'avion, à des conditions de vol à forte vitesse et à basse altitude (au ras du sol). En procédant de cette façon, toute loi de régulation définie pour une valeur de pression maximale et permettant d'éviter les zones de vibrations situées entre les points de fonctionnement au ralenti et au plein gaz de la post-combustion, peut être utilisée pour toutes les conditions de fonctionnement du moteur.

Les niveaux de ralenti et de plein gaz de la post-combustion, appelés respectivement ralenti PC et PGPC, correspondent à des valeurs de consigne de richesses primaire et secondaire imposées. La valeur de consigne ralenti PC correspond à des valeurs minimales de richesses primaire et secondaire et est spécifiée notamment par des conditions de stabilité et de cokéfaction ; la valeur de consigne PGPC correspond à des valeurs maximales de richesses primaire et secondaire et est spécifiée par des conditions de poussée et de performance du moteur.

La loi d'évolution des richesses primaire et secondaire entre ces deux valeurs de consigne est croissante et généralement déterminée en fonction de la position de la manette des gaz du pilote de l'avion. L'invention consiste à choisir cette loi en tenant compte de la position de la zone de vibration et de manière à éviter cette zone de vibration.

Pour cela, par exemple, l'évolution de la valeur des richesses primaire et secondaire peut être déterminée par une loi point par point entre les deux points ralenti PC et PGPC, tous les points étant choisis à l'extérieur de la zone de vibration. En particulier, cette loi peut être définie en choisissant, à partir du diagramme à deux dimensions correspondant à la richesse secondaire en fonction de la richesse primaire, un point intermédiaire P3 situé à l'extérieur de la zone de vibration, les autres points étant obtenus par interpolation linéaire entre les points ralenti PC et P3, et entre les points P3 et PGPC. Le point P3 est choisi tel que tous les points obtenus par interpolation linéaire soient situés à l'extérieur de la zone de vibration. Sur la figure 1, cette loi 1 passe par un point intermédiaire P3 situé entre les deux points ralenti PC et PGPC, le point P3 ayant la même valeur de richesse secondaire que le point PGPC. L'évolution de la richesse secondaire en fonction de la richesse primaire suit d'abord une loi linéaire croissante entre les points ralenti PC et P3, puis reste constante entre les points P3 et PGPC.

La loi représentée sur la figure 1 peut être obtenue par la combinaison de deux lois d'évolution des richesses primaire et secondaire en fonction de la position de la manette du pilote. Ces deux lois peuvent être, pour la richesse primaire, une loi linéaire croissante entre les points ralenti PC et PGPC, et respectivement pour la richesse secondaire une loi linéaire entre les points ralenti PC et P3 puis une loi constante entre les points P3 et PGPC.

La loi d'évolution représentée sur la figure 1 n'est qu'un exemple particulier, il est possible de choisir le point P3 différemment, de choisir plusieurs points intermédiaires, ou de choisir une loi d'évolution différente entre les points ralenti PC et PGPC.

Par ailleurs, il est également possible de tenir compte d'un paramètre supplémentaire qui varie dans le domaine de vol de l'avion.

Ce paramètre est la pression des gaz dans le canal de post-combustion. Dans ce cas, la prise en compte de l'influence de ce paramètre supplémentaire sur l'apparition des fréquences de vibration permet de déterminer un réseau de lois de régulation des richesses primaire et secondaire entre les points ralenti PC et PGPC, chaque loi correspondant à une pression donnée et à une condition de vol donnée, et d'obtenir ainsi une loi d'évolution du carburant en fonction de la manette des gaz du pilote qui est variable dans le domaine de vol de l'avion.

La figure 2 représente une zone de vibration et un exemple de loi de répartition du carburant dans le flux secondaire dans un domaine de fonctionnement de la post-combustion situé au plein gaz.

La valeur de consigne PGPC, spécifiée par des conditions de poussée et de performance du moteur, est fixe pour une condition de vol donnée (une condition de vol est caractérisée notamment par l'altitude et la vitesse de l'avion) mais évolue dans le domaine de vol de l'avion.

A une condition de poussée donnée correspond une valeur de consigne de richesse globale de carburant ;

La répartition du carburant entre les flux primaire et secondaire est ensuite spécifiée par des conditions de performance du moteur et de façon à éviter l'apparition des fréquences de vibration au plein gaz.

Pour déterminer les zones d'apparition des fréquences de vibration au plein gaz de la post-combustion, l'invention consiste à considérer un paramètre, noté FSFAN, donnant une indication de l'enrichissement ou de l'appauvrissement du flux secondaire relativement à la richesse globale de post-combustion et à faire varier ce paramètre en fonction de la pression dans le canal de post-combustion, cette pression étant corrélée au domaine de vol de l'avion.

Le paramètre FSFAN est défini de la façon suivante :

$$FSFAN = \frac{\text{richesse secondaire}}{\text{richesse globale}} - 1$$

Sur la figure 2, un exemple de zone 20 d'apparition d'une fréquence de vibration est représentée dans un diagramme FSFAN en fonction de la pression dans le canal de post-combustion. Cette zone d'apparition des vibrations est tracée pour une valeur ae richesse globale donnée. Cette zone de vibration est une zone dite de "screech" et sa fréquence est f2.

La loi 2 d'évolution des richesses primaire et secondaire au plein gaz de la post-combustion est alors déterminée de façon à éviter la zone de vibration en programmant l'évolution du paramètre FSFAN en fonction de la pression dans le canal de post-combustion par une loi 2 point par point dont un exemple est représenté sur la figure 2.

Les valeurs des richesses primaire et secondaire se déduisent de la loi FSFAN à partir des relations suivantes :

$$\text{richesse secondaire} = (1 + FSFAN) \cdot (\text{richesse globale PC})$$

$$\text{richesse primaire} = \frac{[1 - (\text{débit d'air secondaire}).FSFAN].(\text{richesse globale PC})}{\text{débit d'air primaire}}$$

où le terme PC signifie post-combustion.

L'exemple représenté sur la figure 2 concerne le cas où la valeur de consigne de la richesse globale est fixe.

La valeur de la richesse globale pouvant varier dans le domaine de vol de l'avion, il est possible de tenir compte de ce deuxième paramètre et de déterminer les zones d'apparition des vibrations en fonction de la pression dans le canal de post-combustion et pour différentes valeurs de la richesse globale.

En particulier, des valeurs croissantes de la richesse globale entraînent une augmentation de la taille de la zone de vibration lorsque l'on considère le diagramme représentant FSFAN en fonction de la pression dans le canal de post-combustion.

Dans ce cas, la prise en compte de l'influence de ce deuxième paramètre sur les zones de vibration permet de déterminer un réseau de lois de répartition des richesses dans un domaine de fonctionnement de la post-combustion situé au plein gaz, chaque loi correspondant à une valeur particulière de la richesse globale.

L'invention n'est pas limitée à l'exemple de réalisation précisément décrit, en particulier, elle peut s'appliquer à des turboréacteurs multi-flux, le nombre de flux étant supérieur ou égal à deux, en réglant les valeurs de richesse de carburant sur les différents flux. Elle peut également s'appliquer à des chambres de combustion multi-têtes comportant plusieurs circuits de carburant, en réglant les valeurs de richesse de carburant dans les différents circuits pour éviter des zones de vibrations.

## Revendications

1. Procédé pour éviter les instabilités dues à la combustion dans un turboréacteur comportant au moins deux flux appelés flux primaire et flux secondaire et équipé d'un dispositif de post-combustion dans lequel est injecté un mélange air- carburant dans des proportions mesurées en terme de richesses primaire et secondaire, sur chacun des flux et de richesse globale, caractérisé en ce qu'il consiste :

   - à détecter expérimentalement, lors de la mise au point du turboréacteur, les zones de vibration dues à la post-combustion en fonction des conditions de fonctionnement du turboréacteur et en fonction du domaine de fonctionnement de la post-combustion,

   - à élaborer des lois de régulation des richesses du carburant sur chaque flux permettant d'éviter les zones de vibration détectées.

2. Procédé selon la revendication 1, caractérisé en ce que, pour un domaine de fonctionnement de la post-combustion situé entre le ralenti et le plein gaz, les zones de vibration sont détectées en fonction des valeurs de richesses primaire et secondaire du carburant et pour au moins une condition de fonctionnement du turboréacteur, cette condition de fonctionnement correspondant à une valeur de pression maximale dans le canal de post-combustion, et en ce que au moins une loi de régulation de la richesse secondaire en fonction de la richesse primaire est élaborée de façon à éviter les zones de vibrations détectées dans la condition de fonctionnement du turboréacteur correspondant à une valeur de pression maximale dans le canal de post-combustion.

3. Procédé selon la revendication 2, caractérisé en ce que la loi de régulation des richesses primaire et secondaire déterminée pour une valeur de pression maximale dans le canal de post-combustion est utilisée pour toutes les conditions de fonctionnement du turboréacteur.

4. Procédé selon la revendication 2, caractérisé en ce que les zones de vibration sont détectées en fonction des valeurs de richesses primaire et secondaire du carburant et en fonction de la pression dans le canal de post-combustion, et en ce que un réseau de lois de régulation de la richesse secondaire en fonction de la richesse primaire est élaboré, chaque loi correspondant à une valeur de pression déterminée dans le canal de post-combustion.

5. Procédé selon l'une quelconque des revendications 2 à 4, caractérisé en ce que, pour un domaine de fonctionnement de la post-combustion situé entre le ralenti et le plein gaz, et pour une valeur fixée de pression dans le canal de post-combustion, la loi de régulation de la richesse secondaire en fonction de la richesse primaire est croissante et définie point par point entre deux valeurs de consigne minimale et maximale de richesses primaire et secondaire correspondant respectivement à des points de fonctionnement au ralenti et au plein gaz de la post-combustion, tous les points étant choisis à l'extérieur de la zone de vibration.

6. Procédé selon la revendication 1, caractérisé en ce que pour un domaine de fonctionnement de la post-combustion situé au plein gaz, les zones de vibration sont détectées en fonction de la pression dans le canal de post-combustion et en fonction d'un paramètre noté FSFAN caractéristique de l'enrichissement ou de l'appauvrissement du flux secondaire par rapport à une valeur prédéterminée de la richesse globale de post-combustion, et en ce que au moins une loi de régulation du paramètre FSFAN en fonction de la pression dans le canal de post-combustion est élaborée de façon à éviter les zones de vibration détectées au plein gaz de la post-combustion.

7. Procédé selon la revendication 6, caractérisé en ce que différentes valeurs de la richesse globale de post-combustion, et en ce que un réseau de lois de régulation du paramètre FSFAN est élaboré, chaque loi correspondant à une valeur donnée de richesse globale de post-combustion.

## Patentansprüche

1. Verfahren zur Vermeidung von Instabilitäten, die auf die Verbrennung in einem Turboluftstrahltriebwerk zurückzuführen sind, das wenigstens zwei als Primärstrom bzw. Sekundärstrom bezeichnete Ströme aufweist und mit einem Nachbrenner ausgestattet ist, in welchem ein Luft-Kraftstoff-Gemisch in jeden der Ströme in Proportionen eingespritzt wird, die als primärer Gehalt und sekundärer Gehalt und als globaler Gehalt bemessen sind,
   **dadurch gekennzeichnet,** daß das Verfahren darin besteht,

   - daß bei der Entwicklung des Turboluftstrahltriebwerks die auf die Nachverbrennung zurückführenden Vibrationszonen als Funktion der Betriebszustände des Turboluftstrahltriebwerks und als Funktion des Betriebsbereichs der Nachverbrennung experimentell ermittelt werden, und
   - daß Regelungskurven für die Kraftstoffgehalte in jedem Strom festgelegt werden, die es ermöglichen, die ermittelten Vibrationszonen zu vermeiden.

2. Verfahren nach Anspruch 1,
   dadurch gekennzeichnet,

   daß für einen zwischen Leerlauf und Vollgas liegenden Betriebsbereich der Nachverbrennung die Vibrationszonen als Funktion der Werte des primären und sekundären Kraftstoffgehalts und für wenigstens einen Betriebszustand des Turboluftstrahltriebwerks ermittelt werden, der einem Wert maximalen Drucks in dem Nachverbrennungskanal entspricht,
   und daß wenigstens eine Regelungskurve für den sekundären Gehalt als Funktion des primären Gehalts so festgelegt wird, daß die Vibrationszonen vermieden werden, die in dem Betriebszustand des Turboluftstrahltriebwerks ermittelt werden, der einem maximalen Wert des Drucks in dem Nachverbrennungskanal entspricht.

**3.** Verfahren nach Anspruch 2,
dadurch gekennzeichnet,
daß die Regelungskurve für den primären und den sekundären Gehalt, die für einen maximalen Wert des Drucks in dem Nachverbrennungskanal bestimmt wird, für alle Betriebszustände des Turboluftstrahltriebwerks verwendet wird.

**4.** Verfahren nach Anspruch 2,
dadurch gekennzeichnet,

daß die Vibrationszonen als Funktion der Werte der primären und sekundären Kraftstoffgehalte und als Funktion des Drucks in dem Nachverbrennungskanal ermittelt werden,
und daß eine Schar von Regelungskurven des sekundären Gehalts als Funktion des primären Gehalts festgelegt wird, wobei jede Kurve einem bestimmten Wert des Drucks in dem Nachverbrennungskanal entspricht.

**5.** Verfahren nach einem der Ansprüche 2 bis 4,
dadurch gekennzeichnet,
daß für einen zwischen Leerlauf und Vollgas liegenden Betriebsbereich der Nachverbrennung und für einen festen Wert des Drucks in dem Nachverbrennungskanal die Regelungskurve des sekundären Gehalts als Funktion des primären Gehalts ansteigt und zwischen zwei Sollwerten für den minimalen und maximalen primären und sekundären Gehalt, die Betriebspunkten der Nachverbrennung bei Leerlauf bzw. Vollgas entsprechen, Punkt für Punkt bestimmt wird, wobei alle diese Punkte außerhalb der Vibrationszone gewählt werden.

**6.** Verfahren nach Anspruch 1,
dadurch gekennzeichnet,

daß für einen bei Vollgas liegenden Betriebsbereich der Nachverbrennung die Vibrationszonen als Funktion des Drucks in dem Nachverbrennungskanal und als Funktion eines als FSFAN bezeichneten Parameters ermittelt werden, der für die Anreicherung oder die Verarmung des sekundären Stroms relativ zu einem Wert des globalen Kraftstoffgehalts der Nachverbrennung kennzeichnend ist,
und daß wenigstens eine Regelungskurve des Parameters FSFAN als Funktion des Drucks in dem Nachverbrennungskanal so festgelegt wird, daß die bei Vollgas der Nachverbrennung ermittelten Vibrationszonen vermieden werden.

**7.** Verfahren nach Anspruch 6,
dadurch gekennzeichnet,

daß die Vibrationszonen außerdem für verschiedene Werte des globalen Kraftstoffgehalts der Nachverbrennung ermittelt werden
und daß eine Schar von Regelungskurven des Parameters FSFAN festgelegt wird, wobei jede Kurve einem gegebenen Wert des globalen Kraftstoffgehalts der Nachverbrennung entspricht.

## Claims

**1.** A process for avoiding instabilities due to combustion in a turbojet engine comprising at least two flows, namely a primary flow and a secondary flow, and a reheat facility into which there is injected an air-fuel mixture in proportions measured in terms of primary and secondary richness in each of the primary and secondary flows and of overall richness, characterised in that the process consists of:

during the development of the engine, experimentally detecting the vibration zones due to reheat in dependence upon the engine operating conditions and upon the reheat operating domain, and

preparing control rules for the fuel richness in each flow such that the detected vibration zones can be avoided.

**2.** A process according to claim 1, characterised in that for a reheat operating domain situated between idling and full throttle the vibration zones are detected in dependence upon the primary and secondary fuel richness values and for at least one engine operating condition, such condition corresponding to a peak pressure value in the reheat jet pipe, and in that at least one rule for controlling secondary richness in dependence upon primary richness is prepared so as to avoid the vibration zones detected in the engine operating condition corresponding to a peak pressure value in the reheat jet pipe.

3. A process according to claim 2, characterised in that the rule for controlling the primary and secondary richnesses as determined for a peak pressure value in the reheat jet pipe is used for all engine operating conditions.

4. A process according to claim 2, characterised in that the vibration zones are detected in dependence upon the primary and secondary fuel richness values and upon the pressure in the reheat jet pipe and in that a network of rules for controlling secondary richness in dependence upon primary richness is prepared, each rule corresponding to a predetermined pressure value in the reheat jet pipe.

5. A process according to any of claims 2 to 4, characterised in that in a reheat operating domain situated between idling and full throttle and at a fixed pressure value in the reheat jet pipe the rule for controlling secondary richness in dependence upon primary richness rises and is defined point by point between two minimum and maximum reference values of primary and secondary richnesses corresponding respectively to idling reheat and full-throttle reheat operating points, all the points being chosen outside the vibration zone.

6. A process according to claim 1, characterised in that for a reheat operating domain at full throttle the vibration zones are detected in dependence upon the pressure in the reheat jet pipe and upon a parameter FSFAN characteristic of the enrichment or weakening of the secondary flow relatively to a predetermined overall reheat richness value, and in that at least one rule for controlling the parameter FSFAN in dependence upon the pressure in the reheat jet pipe is prepared so as to avoid the vibration zones detected at full throttle on reheat

7. A process according to claim 6, characterised in that the vibration zones are also detected at various global reheat richness values and in that a network of FSFAN control rules is prepared, each rule corresponding to a given global reheat richness value.

FIG : 1

FIG : 2